# EUROPEAN PATENT APPLICATION

(11) **EP 2 088 761 A2**
(43) Date of publication of application: **12.08.2009**
(21) Application number: 09152038.7
(22) Date of filing: 04.02.2009
(51) Int. Cl.: H04N 1/32

(54) **Communication apparatus and program thereof**

(30) Priority: 07.02.2008 JP 2008028218
(71) Applicant: Konica Minolta Business Technologies, INC., Tokyo 100-0005 (JP)
(72) Inventor: Kumakura, Shunichi, Tokyo 100-0005 (JP); Aoyama, Motoaki, Tokyo 100-0005 (JP); Watanabe, Yukio, Tokyo 100-0005 (JP)
(74) Representative: Alton, Andrew

(57) **Abstract**

A communication apparatus includes: a communication section which executes a facsimile communication with a remote communication apparatus; a communication history control section which stores communication history information for each facsimile communication and controls a communication history; a log information storage section which stores log information relating to the facsimile communication by correlating to the communication history information; a code information generation section which generates code information being able to compress and display the log information; a print data generation section which generates print data for printing the communication history information and the code information of the log information correlated to the communication history information on a recording sheet such that the communication history information and the log information are comparable on the recording sheet; and a print section which prints the print data.

## Description

### CROSS REFERENCE TO RELATED APPLICATION

The present application is based on Japanese Patent Application No. 2008-028218 filed with Japanese Patent Office on February 7, 2008, the entire content of which is hereby incorporated by reference.

### BACKGROUND OF THE INVENTION

### 1. Field of Technology

The present invention relates to a communication apparatus and its program, and particularly to a communication apparatus capable of outputting log information relating to facsimile communications and a program enabling the communication apparatus to output the log information relating to the facsimile communications.

In an apparatus, which executes facsimile communication, such as a facsimile (FAX) utilizing a public line network or an internet facsimile (i-FAX) utilizing an IP(Internet Protocol) network, logs are recorded and stored in a memory of the apparatus so that failures occurred at user's site regarding the facsimile communications can be analyzed.

For example, as a cause of wrong transmission, operational error of a user can be assumed. Then, in order to enable the confirmation of operation contents until the start of communication in case of occurrence of wrong transmission, generally conducted is recording the operation log (MFP) which records the kind of depressed button and the time and procedure of button depression. Further in multifunction peripheral etc., in preparation to an occurrence of failure at communication section or at peripherals, activity logs for recording the operation status of each program for executing the operation of each function are always obtained. And, installed is a system which retrieves the activity logs, in case of occurrence of failure, and utilizes the logs for analyzing the failure. For example in the case of facsimile communication, the activity logs relating to each task activity from the time of start to completion of the communication are always recorded. Further regarding the facsimile communication, a system of protocol log (protocol trace log) is generally realized where protocol (control procedure of facsimile) signals exchanged between the facsimile apparatus and a remote apparatus are recorded for the use of analysis at the time of communication failure.

As described above, as for the log information for analyzing the failures regarding the facsimile communication, various kinds of information such as an operation log, a task activity log, and a protocol log are prepared, however, this log recording is a service function for manufactures etc., to make use of for the improvement of apparatus performance and for the avoidance of problems. Therefore, the log information recorded and stored in the apparatus can not be retrieved by ordinary users, and this can only be obtained by service persons etc., after visiting user's site, executing a prescribed operation on the apparatus and entering into a particular mode. Further, there exists a multifunctional peripheral provided with a remote diagnostic function which enables the diagnosis of the failures by automatically obtaining the log information in the apparatus at the service center side via a network.

On the other hand, there is a technology in the multifunctional peripheral (MFP), where a communication sequence number (ID; Identification) of facsimile reception is stored in the memory of the MFP by correlating with communication control information (address, time of reception, received number of sheets, etc.), and by converting the communication sequence number into code information and printing it on a received document sheet at the bottom blank portion or at back side of the sheet, the received document can be controlled by correlating to the communication sequence number (refer, for example, Unexamined Japanese Patent Application Publication No.2007-43257). In this technology, when a user reads-out the code information of the received document sheet by a scanner, the communication control information corresponding to the communication sequence number is read-out from the memory, and is displayed or printed out to be confirmed.

Even in cases where the remote diagnostic function is installed in the MFP etc., in which the log information in the apparatus can be automatically obtained via the network at the service center side, due to high security consciousness of users in recent years, this function is not usually set active. Thus, actually in many cases, the service persons print out the log information in the apparatus at the user's site, and bring back to their office.

Since the log information is erased in order from the older information due to the restriction of memory capacity, after the occurrence of failure if the user continuously uses the apparatus in the state where the log information is not printed out, the log information (analysis data) necessary for the failure analysis may be erased from the memory. Particularly in the cases of heavy users, who heavily use the facsimile communications, it is highly possible that the memory becomes over capacity relatively soon, and the older information may be eliminated. Thus there is a problem that the service persons need to rush immediately to the user's site, and the service persons' loads for obtaining the log information become heavy.

Conventionally, the log information is continuously recorded, and is not controlled by being segmented and recorded for each facsimile communication. With these log information of simply recording the transit, it is difficult to specify the failure portion. Thus, all the log information or the log information of nearby the assumed time as the failure occurrence time is outputted. Since the contents of the logs are usually the enumeration of binary code defined by the manufacturer, it is a very difficult work to find out the exact information corresponding to the facsimile communication in which a failure occurred. Further, the number of output sheets becomes large for printing these log information of binary code, if the service person does not bring the sufficient number of sheets, it will cause a problem for the user, since a lot of recording sheets are used for printing the information not substantially pertinent to the user.

According to the technology described in the Unexamined Japanese Patent Application Publication No.2007-43257, since the index information (coded communication sequence number) is simply printed on the received document sheet, the actual status information (communication control information) corresponding to the index information needs to be stored in the apparatus. Since this actual status information is sequentially erased from the older information as the memory capacity is overflowed with the new information, if the user continues to use the apparatus after the occurrence of failure, the actual status information may be erased. Thus, in order to obtain the actual status information after the occurrence of failure, the service person needs to rush immediately to the user's site, and is forced to have a heavy load.

The present invention is aiming to solve the abovementioned problems, and an objective of the present invention is to provide a communication apparatus and a program for the apparatus where a large amount of log information exceeding the memory capacity can be recorded on small amount of recording sheets, and among the recorded log information, the information at the time of failure occurrence of facsimile communication can be surely and easily obtained.

### SUMMARY

In order to solve the above-mentioned object, a communication apparatus reflecting one aspect of the present invention includes:
a communication section which executes a facsimile communication with a remote communication apparatus;
a communication history control section which stores communication history information for each facsimile communication and controls a communication history;
a log information storage section which stores log information relating to the facsimile communication by correlating to the communication history information;
a code information generation section which generates code information being able to compress and display the log information;
a print data generation section which generates print data for printing the communication history information and the code information of the log information correlated to the communication history information on a recording sheet such that the communication history information and the log information are comparable on the recording sheet; and
a print section which executes printing based on the print data.

A computer-readable recording medium reflecting another aspect of the present invention is the medium recorded therein a program to enable a communication apparatus which is provided with a storage section to store information, and which executes a facsimile communication with a remote communication apparatus, the functions including:
storing communication history information for each facsimile communication and controlling a communication history;
storing log information relating to the facsimile communication by correlating to the communication history information;
generating code information being able to compress and display the log information;
generating print data for printing the communication history information and the code information of the log information correlated to the communication history information on a recording sheet such that the communication history information and the log information are comparable on the recording sheet; and
executing a print based on the print data.

### BRIEF DESCRIPTION OF THE DRAWINGS

These and other objects, advantages and features of the invention will become apparent from the following description thereof taken in conjunction with the accompanying drawings in which:
Fig. 1 is a block diagram showing a configuration of a multi function peripheral relating to an embodiment of the present invention;
Fig. 2 is an example of communication control report relating to an embodiment of the present invention;
Fig. 3 is a flow diagram showing processes at facsimile communication relating to an embodiment of the present invention;
Fig. 4 is a flow diagram showing a process of communication history control relating to an embodiment of the present invention;
Fig. 5 is a flow diagram showing a protocol log recording process relating to an embodiment of the present invention;
Fig. 6 is a flow diagram showing an operation log recording process relating to an embodiment of the present invention;
Fig. 7 is a flow diagram showing an activity log recording process relating to an embodiment of the present invention; and
Fig. 8 is a flow diagram showing a report outputting process relating to an embodiment of the present invention.

### DETAILED DESCRIPTION OF THE PREFERRED EMBODIMENT

Referring to the drawings, an embodiment of the present invention will be described below.

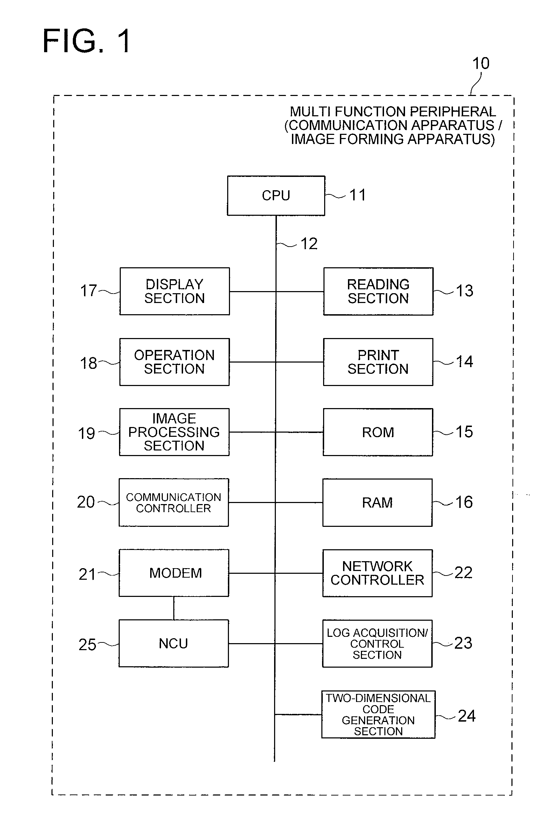

Fig. 1 is a block diagram showing a configuration of a multi function peripheral relating to an embodiment of the present invention.

Multi function peripheral 10 is configured as an image forming apparatus including a communication apparatus provided with a copying function which optically reads original document images and records the copy images on recording sheets, a scanner function which files and stores the image data read from the original document and transmits to an external terminal, a printer function which prints the obtained images on a recording sheet by rasterizing the print data received from the external terminal, a facsimile function (FAX function) which executes facsimile communication with remote apparatuses via public line network, and an internet facsimile function (iFAX function) which executes facsimile communication with external apparatuses via IP network by attaching image data, etc. to electronic mail.

Herein, the above described facsimile communication utilizing the public line network, and the internet facsimile utilizing the IP network are collectively referred as "facsimile communication".

Further, multi function peripheral 10 is provided with a control function of communication history which stores communication history information for each facsimile communication at the time of executing facsimile communication by the FAX or by the iFAX, a function of storing and controlling log information relating to the facsimile communication with correlating to the communication history information, a function of print outputting a communication control report (communication journal) for reporting the communication history of the facsimile communication, and a function of editing and generating the communication control report such that the communication history information is comparable with the code information (two dimensional code) of the log information having been correlated to the communication history information.

As shown in Fig. 1, multi function peripheral 10 is configured such that connected via bus 12 to CPU (Central Processing Unit) 11 for controlling the operation of the multi function peripheral 10 are reading section 12, print section 14, ROM (Read Only Memory) 15, RAM (Random Access Memory) 16, display section 17, operation section 18, image processing section 19, communication controller 20, modem 21, network controller 22, log acquisition/control section 23, and two-dimensional code generation section 24, etc. Under modem 21, NCU (Network Control Unit) 25 is connected.

Reading section 13 executes a function of optically reading out original document images and obtains image data. Reading section 13 is provided with un-illustrated units of a light source to expose light on the original document, a line image sensor which receives the reflected light from the original document to read one width direction line of the original, an optical system including optical element such as a lens or a mirror to guide the reflected light from the original document onto the line image sensor, and a movement mechanism to move the mirror or the light source for sequentially move the reading position with a line unit in the longitudinal direction of the original document.

Print section 14 executes a function of printing out the communication control report as well as a function of forming an image based on the image data on a recording sheet via electrophotographic process. Print section 14 is configured as a so-called laser printer provided with un-illustrated units of a conveyance unit of recording sheet, a photosensitive drum, a charging unit, a LD (Laser Diode) which is controlled emitting an laser beam based on the inputted image data, a scanning unit which scans the laser beam emitted from the LD on the surface of the photosensitive drum, a developing unit, a transfer / separation unit, a cleaning unit and a fixing unit. An LED printer, which exposes the sensitive drum surface by LED instead of the laser beam, and a printer utilizing other system can also work as recording section 14.

In ROM 15, various types of program or fixed data stored, and CPU 11 executes various types of process in accordance with these programs. Ram 16 is utilized as a work memory or an image memory to temporarily store various kinds of data when CPU executes the programs.

Display section 17 is configured with liquid crystal display, and the like, for displaying various types of operation screens, setting screens and guide screens to a user. Operation section 18 is configured with a touch panel which is disposed at the surface of liquid crystal display and detects the pressed down coordinate position, a numeric keypad, and various operation button switches such as start button, etc., and accepts various operations by a user.

Image processing section 42 executes image processing such as enlargement, reduction, cell averaging, resolution conversion, γ conversion, and screen processing on the image data. Communication controller 20 executes a protocol control regarding a facsimile communication, etc. Modem 21 executes modulation and demodulation for enabling the transmission of digital signals via analogue signals. NCU25 executes the control and detection regarding a call and/or a call-in. Network controller 22 executes the function of transmission and reception of various data with an external terminal via LAN (Local Area Network).

In cases where, MFP 10 executes facsimile communication, communication controller 20, modem 21, NCU 25 and CPU 11 function as a communication means to conduct facsimile communication with the remote apparatus (external apparatus). Further, in cases where MFP 10 executes internet facsimile communication, network controller 22 and CPU 11, etc., function as a communication means to conduct facsimile communication with the remote apparatus (external apparatus).

Log acquisition/control section 23 executes functions as a communication history control means which acquires and stores communication history information, by each facsimile communication, when MFP 10 conducts facsimile communication via the facsimile or the internet facsimile, and executes functions as a log information storage means which acquires log information relating the facsimile communication and stores the log information by correlating to each communication history information and control the log information with block unit for each facsimile communication (each communication history information).

Details of the communication history information stored and controlled by log acquisition/control section 23 are such as FAX communication control number, classification of sending or receiving, start time, communication time period, number of communication sheets, communication result, name/dial number of the remote apparatus (address), etc.

Log information to be stored and controlled by log acquisition/control section 23 includes: an operation log which records the information of operational contents of MFP 10 until executing the facsimile communication, namely log information of a type, a time, and an order etc., of a button, ten-keys, start button which are depressed at the touch panel on the operation section 18 before a user executes the facsimile communication; an activity log which is information of the program activity in MFP 10 until finishing the facsimile communication, namely the activity log including the activity information of main tasks including a transmission task until starting the operation relating to the facsimile transmission, and a reception task from incoming through finishing the facsimile reception to returning to an idle state; and a protocol log (or a protocol trace log) which records signal information relating to facsimile control procedure exchanged between MFP 10 and the remote apparatus (the other apparatus). The contents of the logs are such as enumeration of binary code determined by a manufacturer (at development division) of the machine.

When the communication control report is formed and outputted, two-dimensional code generation section 24 executes a function of code information generation means which acquires log information controlled with a block unit for each facsimile communication, and converts the log information by the block unit to a two-dimensional code. The two-dimensional code is such as a QR code (Quick Response code: Registered Mark) which can handle alphanumeric / Chinese characters and binary data, and is good at data compression.

Further, two-dimensional code generation section 24 is provided with a function for adding an error-correcting code (redundant code) to enhance data restoration potential against blot or damage of the code image, and a function for changing the adding amount of the error-correcting code in accordance with the error-correcting level. The adding amount change of the error-correcting code may be selected from the levels of plural preset steps. Further, two-dimensional code generation section 24 is provided with a resizing function for adjusting the size of the two-dimensional code (code image) in accordance with a data amount to be coded and an error-correcting level, etc., and a code division function for dividing the data to be coded and forms plural two-dimensional codes (code images). The division number of the two-dimensional code may be four divisions or eight divisions for example.

CPU 11 executes a program to function as a report forming means which utilizes the communication history information stored and controlled by log acquisition/control section 23, and the two-dimensional code of the log information created by two-dimensional code generation section 24, to edit and form the communication control report; and the communication control report is edited and formed such that the communication history information and the two-dimensional code of the log information correlated to the communication history information are arranged for example in a view format.

In a print output mode of the communication control report, there are provided a manual output mode where a print output is executed by a prescribed operation of a user or a service person through operation section 18, and an automatic output mode where the print output is automatically executed after every prescribed number of communications. The switching of manual/automatic print out modes, and the prescribed number of communications can be set through operation section 18.

For example, in the case of automatic output mode to output after every 100 communications, CPU 11 automatically judges the condition based on a program stored in ROM 15, and when the condition of 100 communications are attained, CPU 11 acquires, from log acquisition/control section 23, the communication history information for the latest 100 communications. Further, CPU 11 sequentially transfers, from log acquisition/control section 23 to two-dimensional code generation section 24, the log information correlated to the communication history information for the latest 100 communications, and obtains the two-dimensional code of the log information for 100 communications sequentially generated by two-dimensional code generation section 24. Thus a communication control report is formed in which the communication history information for the latest 100 communications and the two-dimensional codes for the log information are arranged based on a prescribed format, and printed out from print section 14.

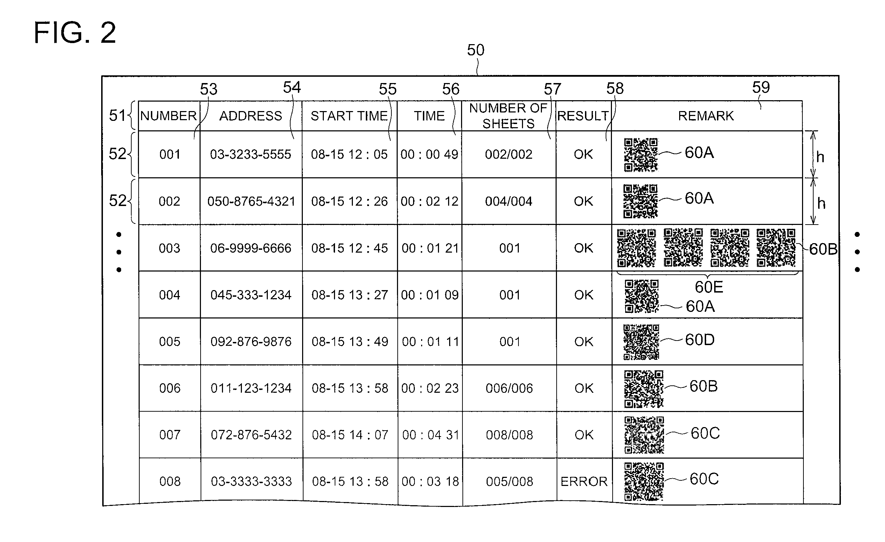

Fig. 2 shows an example of the communication control report (communication journal) 50 of the facsimile communication formed and outputted through the above described procedures.

In communication control report 50, the history of the facsimile communication executed by MFP 10 is described. In detail, a plurality of records (communication history information for plural communications) is described, for example, in a view format shown in Fig. 2. The uppermost column of the view format is item name column 51 where detailed item names of the records for the facsimile communications described in communication control report 50 are described. Below item name column 51, a plurality of record column 52 for describe each one record is arranged downward. Height of each record column 52 is fixed and standardized to a prescribed height size "h".

The record column 52 is sectionalized to number column 53 where a communication control number (ID) of a facsimile communication is described, address column 54 where a name or a dial number of the remote apparatus is described, start time column 55 where a date and time of communication start is described, time column 56 where a communication time period is described, number of sheets column 57 where number of sheets used for the communication is described, result column 58 where a result of the communication is described, and remark column 59. At each section (53 - 59) in item name column 51, listed are "number", "address", "start time", "time", "number of sheets", "result", and "remark". In record column 52, each of number column 53, remote address column 54, start time column 55, time column 56, number of sheets column 57, result column 58 is a communication history information description section for describing the communication history information (a communication control number / a name or a dial number of the remote machine / a date and time of communication start / a communication time period / number of sheets / a result) for each facsimile communication.

Record column 52 for each facsimile communication record is arranged top to bottom in chronological order of communication history. On each one of record column 52, at each of number column 53, remote address column 54, start time column 55, time column 56, number of sheets column 57, result column 58, above-described item of the record for one facsimile communication is described. Further, on remark column 59 two-dimensional code 60 (60A - 60E) is described which is formed by coding the log information corresponding the record described on a single record column 52 (communication history information for a single communication).

Since image size of two-dimensional code 60 varies according to the data amount of the log information from which the two-dimensional code is converted, there may be cases where two-dimensional codes with various image sizes are displayed in remark column 59. In communication control report 50 shown in Fig. 2, an example is illustrated in which two-dimensional codes 60A, 60B, 60C, and 60D, each having four types of image size, are arranged. The relationship of image sizes of exemplified two-dimensional codes 60A - 60D is: 60A < 60B < 60C < 60D.

In the present embodiment, in order that two-dimensional code 60 can be arranged in remark column 59, division and size adjustment of two-dimensional code 60 is executed according to the height and area of remark column 59. In communication control report 50 shown in Fig. 2, a two-dimensional code displayed in remark column 59 of record column 52 of communication control number "003", is shown as two-dimensional code 60E which being divided in quarters. Two-dimensional code 60E is divided in quarters into the image size of two-dimensional code 60B, and the quarterly divided two-dimensional code 60B is laterally arranged in a line with prescribed intervals, which is exemplified.

This kind of division and size adjustment of two-dimensional code 60 is executed by two-dimensional code generation section 24. For example in cases where the image size becomes so large, due to large amount of log information, if a single two-dimensional code is generated that the two-dimensional code is determined not to be capable of being arranged inside remark column 59, after comparing the height of the single two-dimensional code image with the height of remark column 59, the two-dimensional code is formed by division. Further, after comparing the total image size of the divided two-dimensional code with the area size of remark column 59, if the two-dimensional codes are determined not being able to be arranged in remark column 59, the image size of the two-dimensional code will be adjusted. For example, in the case of two-dimensional code 60E as shown in Fig. 2, where each divided two-dimensional code 60B is laterally arranged in line, whether or not two-dimensional code 60E can be arranged in remark column 59 may be determined by comparing the total image width of two-dimensional code 60E with the width of remark column 59.

The size adjustment of two-dimensional code is, for example, executed by reducing the image size such that the image of the two-dimensional code can be arranged in remark column 59 by eliminating a part of the log information after calculating back from the size of remark column. In this case, for example, it is preferable to eliminate from the older information among the log information. Further, since the two-dimensional code is provided with redundancy to enhance data restoration potential against blot or damage of the code image, the image size may be decreased by adjusting a parameter for generating the two-dimensional code to diminish the redundancy.

Further the kind of log information to be displayed on communication control report 50 by two-dimensional coding may be selected based on the communication result or the generated error type. For example, the activity log tends to be large in data size, and need for analysis of the activity log is not high in case of successful communication result. Therefore, in case of successful communication result (OK in Fig. 2), only the operation log and the protocol log may be selected and described, and in case of failure result (ERROR in Fig. 2), the activity log may be added to be described.

Next, processes executed by MFP 10 relating history control of FAX communication, recording of log information relating to FAX communication, and print outputting of communication control report will be described in detail based on a flow chart.

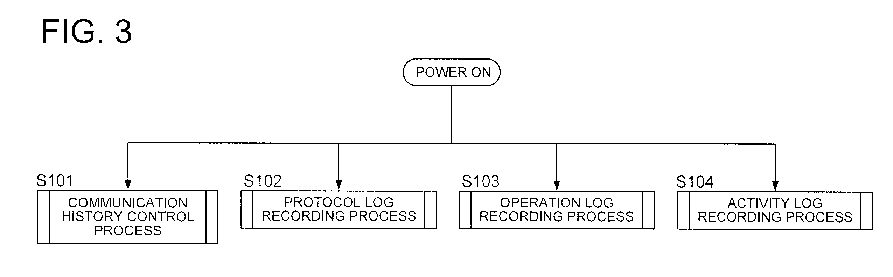

Fig. 3 shows processes executed by MFP 10 relating to history control of FAX communication, and log recording. MFP 10 executes initialization process at power-on. After that, MFP 10 executes in parallel communication history control process (step S101), protocol log recording process (step S102), operation log recording process (step S103), and activity log recording process (step S104). In detail, each process is executed in infinite loop while power is on, and after main power of MFP 10 is tuned on, each process is sequentially executed in time-sharing mode (time-sharing process, for example, with the same time interval).

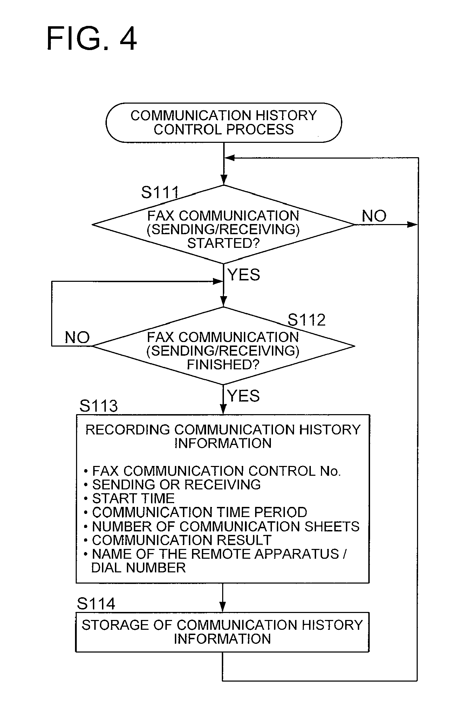

Fig. 4 shows details of a communication history control process (step S101 of Fig. 3) executed by MFP 10. In the communication history control process, CPU 11 monitors whether FAX communication (sending / receiving) is started (loop of step S111 - step S111; NO). When FAX communication is started (step S111; YES), CPU 11 monitors whether the FAX communication (sending / receiving) is finished (loop of step S112 - step S112; NO). When FAX communication is finished (step S112; YES), CPU 11 records the communication history information of the FAX communication of this time (step S113).

Details of the communication history control information to be recorded are, for example, FAX communication control number (communication control number), classification of sending or recording, start time (date and time of start), communication time period, number of communication sheets, communication result, name or dial number of the other (remote) apparatus. Log acquisition / control section 23 stores the recorded communication history control information (step S114). In the communication history control process, these steps from step S111 to step S114 are repeatedly executed.

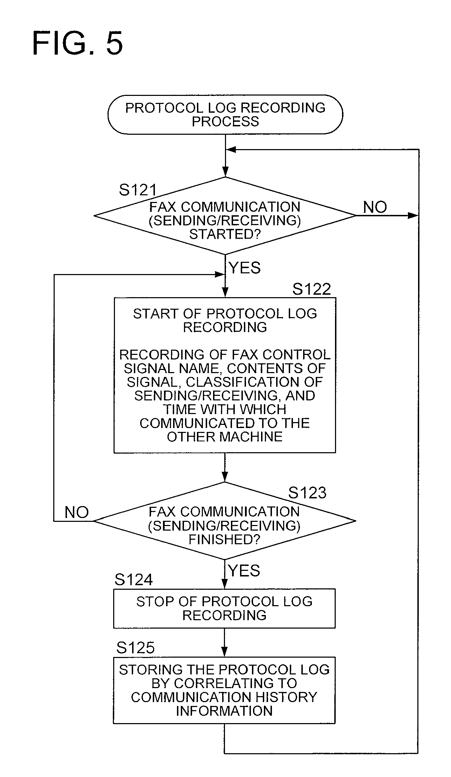

Fig. 5 shows details of a protocol log recording process (step S102 of Fig. 3) executed by MFP 10. In the protocol log recording process, CPU 11 monitors whether FAX communication (sending / receiving) is started (loop of step S121 - step S121; NO). When FAX communication is started (step S121; YES), CPU 11 starts the recording of protocol log (step S122). Details of the protocol log to be recorded are, for example, FAX control signal name exchanged with the remote apparatus, contents of the signal, classification of sending or receiving, communicated time, etc.

CPU 11 monitors whether FAX communication (sending / receiving) is finished while recording the protocol log (loop from step S123 to step S123; NO). When Fax communication is finished (step S123; YES), CPU 11 stops the protocol log recording (step S124). Log acquisition / control section 23 stores the recorded protocol log by correlating to communication history information (step S125). In the protocol log recording process, these steps from step S121 to step S125 are repeatedly executed.

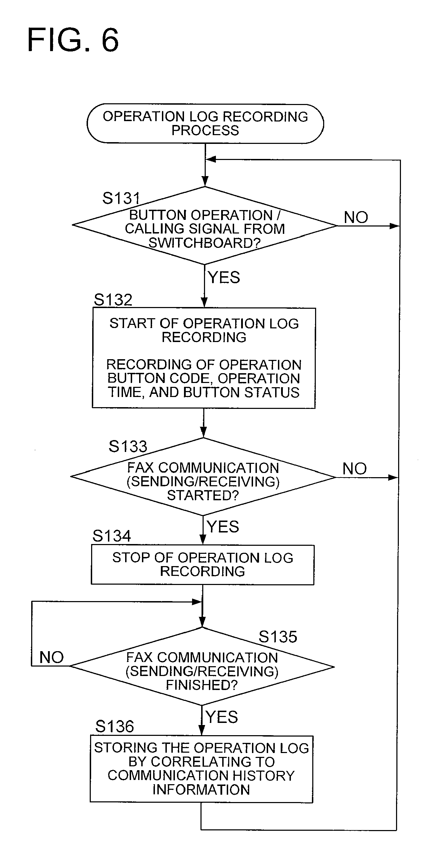

Fig. 6 shows details of an operation log recording process (step S103 of Fig. 3) executed by MFP 10. In the operation log recording process, CPU 11 monitors whether there is a button operation at operation section 18 or a calling signal from a telephone switchboard (loop from step S131 to step S131; NO). When the button operation at operation section 18 or the calling signal from the telephone switchboard is detected, (step S131; YES), CPU 11 starts the operation log recording (step S132). Details of the operation log to be recorded are, for example, an operation button code, operation time, and button status.

Subsequently, CPU 11 monitors whether FAX communication (sending / receiving) is started (step S133). For example in the cases where another job is started, standby screen is returned before FAX communication, or an incoming call occurred but tuned off before the start of communication or connected to a telephone not to FAX, etc., CPU 11 determines that the FAX communication is not started. If the FAX communication is not started (step S133; NO), returning to step S131, CPU 11 continues to monitor if there is a button operation at operation section 18 or a calling signal from a telephone switchboard (step S131), and to record the operation log until the FAX communication starts.

When the FAX communication is started (step S133; YES), CPU 11 stops the recording of operation log (step S134),and monitors whether the FAX communication (sending / receiving) is completed (loop of step S135 - step S135; NO). When the FAX communication is completed (step S135; YES), log acquisition / control section 23 stores the recorded operation log by correlating to the communication history information (step S136). In the operation log recording process, these steps from step S131 to step S136 are repeatedly executed.

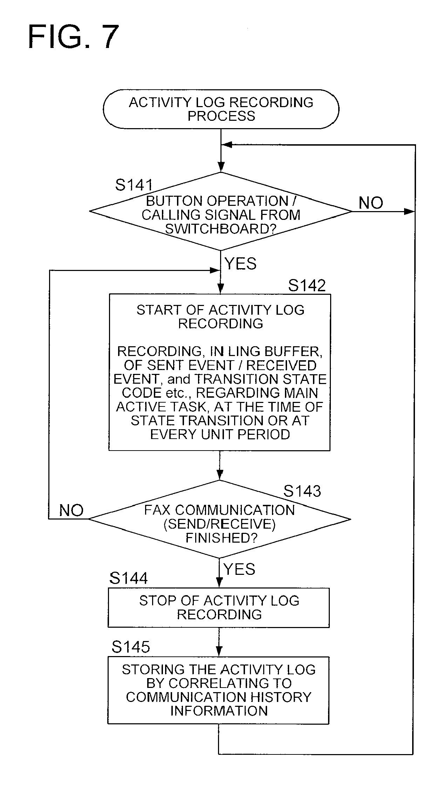

Fig. 7 shows details of an activity log recording process (step S104 of Fig. 3) executed by MFP 10. In the activitylog recording process, CPU 11 monitors whether there is a button operation at operation section 18 or a calling signal from a telephone switchboard (loop from step S141 to step S141; NO). When the button operation at operation section 18 or the calling signal from the telephone switchboard is detected, (step S141; YES), CPU 11 starts the activity log recording (step S142). In detail, for example, CPU 11 records a sent event, a received event, and a state transition code (state code) at the time of state transition or at every unit period in ling buffer.

Subsequently, CPU 11 monitors whether the FAX job is completed, namely whether FAX transmission or a print of FAX reception is completed (step S143). If the FAX job is not completed (step S143;NO), returning to step S142, continues the activity log recording until the FAX job is finished.

If the FAX job is completed step S143; YES), CPU 11 stops the activity log recording (step S144). Log acquisition / control section 23 stores the recorded activity log by correlating to the communication history information (step S1145). In the activity log recording process, these steps from step S141 to step S145 are repeatedly executed.

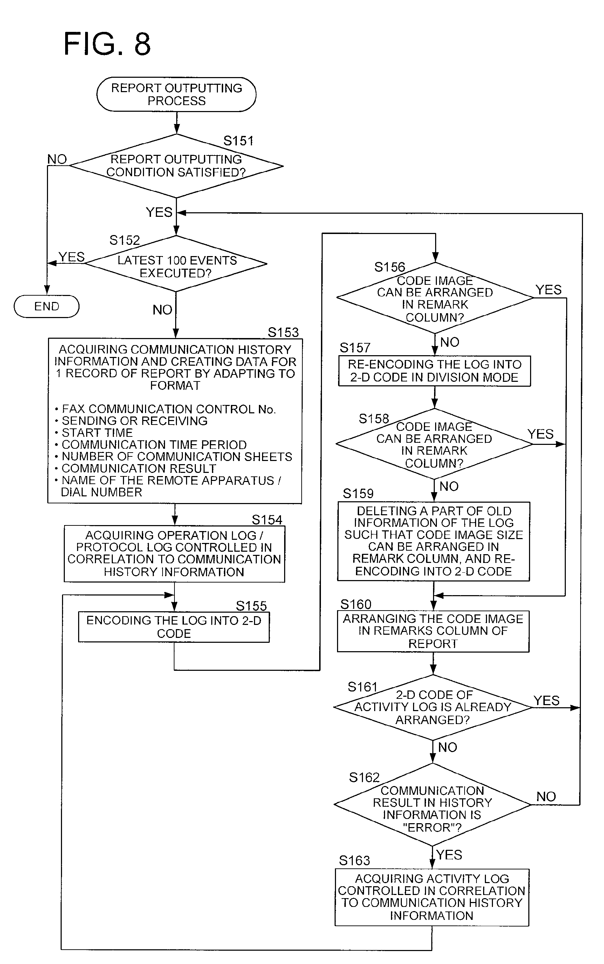

Fig. 8 shows a report outputting process executed by MFP 10. Here the case is described as an example where the print output mode of communication control report is set as automatic output mode, and the outputting is automatically executed by every 100 communications.

In the report outputting process, CPU 11 determines whether the condition of report outputting is satisfied (step S151). The report outputting condition, in this case, is that 100 times of FAX communication have been carried out after the setting of automatic output mode or after the previous outputting of the report. In the case where less than 100 times of FAX communication have been carried out after the setting of automatic output mode or after the previous outputting of the report, namely the condition of report outputting is not satisfied (step S151; NO), the process is put to an end (step S151; NO). In the case where 100 times FAX communications are achieved and the report outputting condition is satisfied (step S151; YES), formation of the communication control report for outputting the report is started.

CPU 11 determines whether the communication history (record) of the latest 100 events has been described in the communication control report (step S152). If the description of the communication history of the latest 100 events is not completed (step S152; NO), CPU11 acquires the oldest undescribed communication history information from log acquisition / control section 23, and generates data for one record of the communication control report by adapting to the format exemplified in Fig. 2 (step S153)

The order of the communication history information to be acquired is: the first is the communication history information of 100-communications-before the latest; the second is the communication history information of 99-communications- before the latest; ···; the hundredth is the latest communication history information. Details of the data for one record are, for example, FAX communication control number (communication control number) which is recorded and stored in the communication history control process (refer to Fig. 4), classification of sending or receiving, start time (start date and time), communication time period, number of communication sheets, communication results, name or dial number of the remote apparatus, etc.

Subsequently, CPU 11 acquires the operation log and the protocol log controlled in correlation to presently described communication history information, from log acquisition / control section 23 (step S154), and transfers to two-dimensional code generation section 24.

Two-dimensional code generation section 24 two-dimensionally encodes the received operation log and the protocol log with a non-divisional mode (step S155), and determines whether the singly formed code image (two-dimensional code) can be arranged in the remark column section (refer to remark column 59 in Fig. 2) (step S156). If the two-dimensional code image are determined not being able to be arranged in the remark column section after comparing the height of the code image and the height of the remark column section (step S156; NO), two-dimensional code generation section 24 re-encodes the operation log and the protocol in divisional mode (step S157), and determines whether the re-encoded two-dimensional code image can be arranged in the remark column of the communication control report (step S158).

After comparing the total image size of the code images formed in divisional mode with the size of the remark column area, or comparing the total image width of the divided two-dimensional codes with the width of the remark column, in the case where each divided two-dimensional code is laterally arranged in line, the total code image is determined to be incapable of being arranged in the remark column (step S158; NO), the image size is adjusted (reduced) such that the two-dimensional code image can be arranged in the remark column. In detail, a part of the old information of at least one of operation log and protocol log is deleted and re-encoded to be two-dimensional code to adjust the size of code image (step S159). In addition to the above or alternatively to the above, the size of code image may be reduced by adjusting a parameter for creating the two-dimensional code to reduce the redundancy.

CPU 11 arranges this code image in the remark column on the communication control report corresponding to the data for one record presently described (step S160). Further, in the case where the singly formed code image can be arranged in the remark column (step S156; YES), and also in the case where the code image formed in divisional mode can be arranged in the remark column (step S158; YES), those code images are similarly arranged in the remark column on the communication control report corresponding to the data for one record presently described (step S160).

Subsequently, CPU 11 determines whether arranged in the communication report is the two-dimensional code (code image) of the activity log, which is controlled by correlating to the communication history information presently described on the communication control report (step S161). If not arranged (step S161; NO), CPU 11 determines whether communication result of the presently described communication history on the communication control report is "ERROR" or not (step S162).

In the case where the communication result is "ERROR" (step S162; YES), CPU 11 acquires the activity log, which is controlled by correlating to the communication history information presently described, from log acquisition / control section 23 (step S163), and transfers the acquired activity log to two-dimensional code generation section 24 by returning to step S155. After that, two-dimensional code generation section 24 adds the presently received activity log to the previously received operation log and protocol log, and executes again the above steps from S155 to S160.

In cases where the communication result is "OK" and not "ERROR" (step S162; NO), or in cases where the two-dimensional code of the activity log is already arranged in the corresponding remark column (step S161; YES), the process returns to step S152. By the above, the description of the data for one record and the description of the corresponding log information in the remark column are completed, and the formation of the communication control report is carried out by repeatedly executing the steps from S152 to S163. Thus, when execution of describing the communication history (record) for the latest 100 communications is completed (step S152; YES), the process is finished (END).

The data (image data) of the communication control report formed by the above-described report outputting process is transferred to print section 14, and printed out by print section 14. The service person or the engineer of manufacturer who received this communication control report can obtain the row data (binary code) of the operation log, protocol log or activity log for a task relating to the facsimile communication of corresponding MFP 10 for each facsimile communication (for every record), by reading and decoding the two-dimensional code described in the remark column of the communication control report with a two-dimensional code reader. Thus they are enabled to analyze in detail the operation and protocol of the facsimile communication, or the task activity for each facsimile communication by the use of these log information.

In this way, according to MFP 10 relating to the present embodiment, various log information of the operation log, the activity log of program (task), and the protocol log corresponding to each facsimile communication is controlled by correlating to the communication history information of the facsimile communication. And at the time of forming the communication control report, information of these logs is automatically described on the report in such format that the communication history information and the information of these logs can be comparable. Accordingly, in cased where any trouble is generated in the facsimile communication, only by outputting the communication control report, the log information for the trouble generation cause analysis can be obtained.

Accordingly, the service persons' troublesome work for obtaining the log information at the time of trouble generation can be reduced. Namely, since this communication control report can be outputted automatically or manually by the user' operation, if the user keeps the automatically or manually outputted communication control report, the log information for the analysis data of trouble generation cause can be maintained at the user's site.

For example, even in the apparatus in which the communication history information and the corresponding log information for the latest 100 communications are stored in the apparatus while the information of 101-communications-before is successively deleted due to the limitation of memory capacity, the communication history information for all communications executed by the apparatus and the corresponding log information are recorded and surely remain, if the communication control report is automatically outputted by every 100 communications even in the case where the user continuously uses the apparatus after the occurrence of a problem.

Accordingly, decreased is the service persons' burden that the service persons need to rush immediately to the user's site in order not to miss the log information, or they need to immediately obtain the log information by entering into the special mode via prescribed apparatus operation as conventionally, thus they are required immediate response.

Further, since the possibility is reduced that the service persons fail to obtain the log information for the analysis data of trouble generation cause, the cases may be decreased where they have to wait until the generation of the next trouble in they failed to obtain the log information for the present problem. Moreover, the information about the trouble of low reproducibility can be also surely obtained. Since each communication history information and the corresponding log information (two-dimensional code) are arranged with the comparable format on the communication control report, the correct log information corresponding to the trouble generated facsimile communication can be easily and surely found out. Specifically, according to the present embodiment, since the log information is described in association to the correlated communication history information on the same page, the log information corresponding to the trouble generated facsimile communication can be easily found out. Due to this, the time for trouble solution by the service department or manufacturer may be shortened.

As for users, at the time of trouble occurrence, they will not have to wait, in unusable state of the apparatus until a service person arrives. Further, since as the measures for the trouble are promptly and adequately taken, in case that the cause of the trouble being in the apparatus, improvement of reliability of the apparatus will be promoted, while in case that the cause being in user's wrong operation, caution to the user or education of operation skill will be promoted to prevent the reoccurrence of the trouble.

Further, since the log information is converted to two-dimensional code and the data is compressed to describe on the communication report, print area of the information is reduced and consumption of the recording sheet will be saved. Thus, according to MFP of the present embodiment, large amount of log information exceeding the memory capacity can be recorded on a small amount of recording sheets, and out of the log information, the information of the trouble relating to the facsimile communication can be easily and surely obtained. Further, since outputting of the communication control report is conventionally and commonly conducted, the printing out of log information on the communication control report will diminish the use's unpleasant feeling against printing out of log information by using user's recording sheets.

Further, according to the present embodiment, the communication control report is formed in view format where a communication history information column for describing the communication history information for each facsimile communication (in communication control report 50 shown in Fig. 2; number column 53, remote address column 54, start time column 55, time column 56, number of sheet column 57, result column 58); and a remark column (remark column 59 in communication control report 50 shown in Fig. 2) corresponding to the communication history information column are provided, and the two-dimensional code of the log information is described in the remark column. Therefore, the relationship between the communication history information and the two-dimensionally coded log information becomes clear, and the log information corresponding to the facsimile communication with problem occurrence can be clearly discriminated. And, due to utilizing the remark column, there will be no need to provide, on the communication control report, an exclusive area for describing the two-dimensional code of the log information, thus the communication control report can be formed compact.

Further, the two-dimensional code (code image) is formed without being divided if it can be arranged in the height or the area of the column where the communication history report for one communication is to be described (height or area of the remark column), and if it cannot be arranged due to the large size, the two-dimensional code is dividedly formed to be arranged in the column. Further, in the cases where, even if the two-dimensional code is dividedly formed, the total code images cannot be arranged in the height of the column or area for the communication history report for one communication, the code image is reduced by lowering the redundancy of the two-dimensional code, or by deleting a part of the log information. Thus by adjusting the generation parameter of the code information according to the column height or the area, the two-dimensional code (code image) is made to be arranged in the height or the area of the column where the communication history report for one communication is to be described. Namely, the log information, which varies in data amount by each communication, is encoded such that arranged in the display area (remark area 59) which is adapted to the fixed display area (column for description of communication history information / record column 52).

Thus, description density of the communication history information and the two-dimensional code is increased, and larger number of communication history (number of records) can be described on a sheet of communication control sheet to reduce the number of output sheets.

The kind of log information to be described in the communication control report is selected based on such as the result or type of error occurred in the facsimile communication. Specifically, in the case of good communication result, only the operation log and the protocol log are selected, and in the case of abnormal result, the activity log may be added. By this, the data amount of log information to be described in the communication control report can be reduced according to the result of facsimile communication, and the size of two-dimensional code image encoded from log information is reduced, thus the communication control report can be formed compact.

Herein, by utilizing the operation log, the operations of the communication apparatus conducted before executing the facsimile communication can be analyzed, this enables to specify the wrong operation, etc. which being the cause of error generation. By utilizing the activity log, the activities of the task of inside the communication apparatus until the completion of facsimile communication can be analyzed, this enables to specify the wrong activity, etc. which being the cause of the error generation. By utilizing the protocol log, the signals relating the facsimile control procedures exchanged between the communication apparatus and the remote apparatus can be analyzed, this enables to specify the error of facsimile control, etc. which being the cause of the error generation.

In the above, although the embodiment of the present invention is explained referring to the drawings, specific configuration should not be restricted to that shown in the embodiment. Changes and additions without departing from the concept of the present invention should be included in the present invention.

For example in the present embodiment, three kinds of log information of the operation log, the activity log, and the protocol log are obtained, however, the configuration is possible where the only one or two kinds of log information is obtained. In this case, the kind of log information to be obtained may be changed by the setting in a log information selection mode.

Further in obtaining the operation log, since the start of operation to conduct the facsimile transmission is possibly unable to be clearly specified, it may be applicable to record the information of the operation contents for the previous operations or the previous/subsequent operations so as to be overlapped, or to continuously record the information of the operation contents , and at the time of start button depression, to extract and record the prescribed number of previous operations, since the start button depression being the start of the facsimile transmission.

As for the code information to be created by encoding the log information, various two-dimensional codes are applicable including such as the matrix type code QR code where the information is displayed by the configuration of alternating black and white cells displayed in mosaic like matrix, and the stack type code where the configuration of vertically stacking linear barcodes displays the information horizontally and vertically, and other various codes which can compress and display the information.

As for the code information creation section shown in Fig. 1 as two-dimensional code creation section 24, may be configured with a program stored in ROM 15, other than being configured such the exclusive hardware.

Further, the format of the communication control report is not restricted to the view format as communication control report 50 shown in Fig. 2. The code information such as the two-dimensional code can be described in an exclusively provided code information (log information column) other than the remark column, can be described in the blank space if available at the side of the record column, can be described on the rear face of the communication control report, or on the other page than the communication report, for example, on the page for the description of the code information attached after the communication control report. In cases where the code information is described on the rear face or on the other page of the communication control report, by describing the corresponding communication control number near the code information, the comparison with the communication history information will be possible. However, in the case of describing on the rear page of the communication report, number of outputting sheets will not increase, while the apparatus is required double sided printing capability. In the case of describing on the other page, the number of outputting sheets will increase. Therefore, as explained in the embodiment, the code information (log information) is preferably described on the same page of the correlated communication history information.

Further, a discrimination code can be embedded at the top of the code information in order for making the kind of code information described on the communication control report discriminable, or the remark column can be divided, for example, to three vertical sections in case of describing the three kinds of log information.

Further, in communication control report 50 shown the height of each record column 52 is fixed and standardized, however, height of each record column 52 can be made variable according to the height of two-dimensional code 60 such that two-dimensional code 60 can be arranged in remark column 59.

Further, the contents and the procedures of the report outputting process are not restricted to those explained in the embodiment. For example, in the embodiment, the communication control report is automatically outputted in the automatic output mode by every 100 communications, however, the outputting condition of report of this automatic outputting can be the prescribed time or time interval set by the user.

Further the procedure is possible where before acquiring the log information, determined is whether the result of the corresponding communication is error or not, and if it is not error, only the operation log and the protocol log are acquired and encoded, and if the result is error, the activity log is additionally acquired and encoded. Specifically, for example, after the step S153, the determination of step S162 is executed, and in the case of "NO" (result is OK), only the operation log and the protocol log are acquired and step S155 and the following are executed, while in the case of "YES" (the result is error) the operation log, the protocol log and the activity log are acquired and step S155 and the following are executed. Then, after executing up to step S160, the steps of S161 and the following are skipped, and the process returns to step S152.

Further, the procedure is possible where before encoding the log information, examining the data amount of the log information and the result (error or not) of the facsimile communication, determining whether the undivided code information can be arranged or divided code information can be arranged, in the height or area of the communication history information column for one communication on the communication control report, whether it is necessary to reduce the redundancy of the code information or to decrease the data amount of the log information to reduce the size of the code image in order to arrange the code information in that height or area, or whether it is required to select the kind of log information, and the code information is created by utilizing parameters set to conform to the result of the determination.

As for the type of facsimile communication, other than the facsimile utilizing the public line network or the internet facsimile utilizing the IP network to communicate by electronic mail address, the IP facsimile (IPFAX) is also applicable in which the remote IP address is consulted to DDS server by utilizing DDNS (Dynamic Domain Name System), and after specifying the remote apparatus direct transmission is executed.

The present invention is applicable to communication apparatuses such as a facsimile apparatus or to programs for operating the apparatuses, not being limited to the MFP (multi functional peripherals) explained in the present embodiment.

According to the present invention, large amount of log information exceeding the memory capacity can be recorded on recording sheets, thus out of this log information, the information at problem relating to the facsimile communication can be obtained.

## Claims

1. A communication apparatus comprising:
a communication section which executes a facsimile communication with a remote communication apparatus;
a communication history control section which stores communication history information for each facsimile communication and controls a communication history;
a log information storage section which stores log information relating to the facsimile communication by correlating to the communication history information;
a code information generation section which generates code information being able to compress and display the log information;
a print data generation section which generates print data for printing the communication history information and the code information of the log information correlated to the communication history information on a recording sheet such that the communication history information and the log information are comparable on the recording sheet; and
a print section which executes printing based on the print data.

2. The communication apparatus of claim 1, wherein the print data is for printing a communication control report in which the communication history information and the code information of the log information correlated to the communication history information are described in association with each other on a same page.

3. The communication apparatus of claim 2, wherein the communication control report is provide with a communication history information column for describing the communication history information by each facsimile communication, and a remark column corresponding to the communication history information column, wherein the code information is described in the remark column.

4. The communication apparatus of claim 2, wherein the code information generation section generates the code information in an undivided form or in a divided form depending on height or area of a space where the communication history information for one communication is described on the communication control report.

5. The communication apparatus of claim 2, wherein the code information generation section adjusts a parameter of generating the code information depending on height or area of a space where the communication history information for one communication is described on the communication control report.

6. The communication apparatus of claim 2, wherein the code information generation section generates the code information by reducing a data amount of the log information such that the code information can be arranged in the height or area of a space where the communication history information for one communication is described on the communication control report.

7. The communication apparatus of claim 2, wherein the print data generation section selects a kind of log information to be described as the code information on the communication control report based on a result of the facsimile communication.

8. The communication apparatus of claim 1, wherein the log information comprises at least one of an operation log which records information of a content of an operation on the communication apparatus until executing the facsimile communication, an activity log which records information of task activity in the communication apparatus until finishing the facsimile communication, and a protocol log which records signal information relating to a facsimile control procedure exchanged between the communication apparatus and the remote communication apparatus.

9. A computer-readable recording medium recorded therein a program to enable functions of a communication apparatus which is provided with a storage section to store information, and which executes a facsimile communication with a remote communication apparatus, the functions comprising:
storing communication history information for each facsimile communication and controlling a communication history;
storing log information relating to the facsimile communication by correlating to the communication history information;
generating code information being able to compress and display the log information;
generating print data for printing the communication history information and the code information of the log information correlated to the communication history information on a recording sheet such that the communication history information and the log information are comparable on the recording sheet; and
executing a print based on the print data.

10. The recording medium of claim 9, wherein the print data is for printing a communication control report in which the communication history information and the code information of the log information correlated to the history information are described in association with each other on a same page.

11. The recording medium of claim 10, wherein the communication control report is provided with a communication history information column for describing the communication history information by each facsimile communication, and a remark column corresponding to the communication history information column, wherein the code information is described in the remark column.

12. The recording medium of claim 10, wherein the function of generating code information generates the code information in an undivided form or in a divided form depending on height or area of a space where the communication history information for one communication is described on the communication control report.

13. The recording medium of claim 10, wherein the function of generating the code information adjusts a parameter of generating the code information depending on height or area of a space where the communication history information for one communication is described on the communication control report.

14. The recording medium of claim 10, wherein the function of generating code information generates the code information by reducing a data amount of the log information such that the code information can be arranged in the height or area of a space where the communication history information for one communication is described on the communication control report.

15. The recording medium of claim 10, wherein the function of generating print data selects a kind of log information to be described as the code information on the communication control report based on a result of the facsimile communication.

16. The recording medium of claim 9, wherein the log information comprises at least one of an operation log which records information of a content of an operation on the communication apparatus until executing the facsimile communication, an activity log which records information of task activity in the communication apparatus until finishing the facsimile communication, and a protocol log which records signal information relating to a facsimile control procedure exchanged between the communication apparatus and the remote communication apparatus.

17. A communication method of a communication apparatus which is provided with a storage section to store information, and which executes a facsimile communication with a remote communication apparatus, the method comprising:
storing communication history information for each facsimile communication and controlling a communication history;
storing log information relating to the facsimile communication by correlating to the communication history information;
generating code information being able to compress and display the log information;
generating print data for printing the communication history information and the code information of the log information correlated to the communication history information on a recording sheet such that the communication history information and the log information are comparable on the recording sheet; and
executing a print based on the print data.
